# EUROPÄISCHE PATENTANMELDUNG

(11) **EP 1 248 094 A2**
(43) Veröffentlichungstag der Anmeldung: **09.10.2002**
(21) Anmeldenummer: 02012971.4
(22) Anmeldetag: 27.02.1997
(51) Int. Cl.: G01M 17/013, G01B 5/255

(54) **Achsmesshalter zur Befestigung eines Messkopfes an einem Fahrzeugrad**

(30) Priorität: 05.02.1997 DE 19704163
(62) Teilanmeldung aus: 97103187.7
(71) Anmelder: HAWEKA Auswuchttechnik Horst Warkotsch GmbH, 30938 Burgwedel (DE)
(72) Erfinder: Ohnesorge, Axel, 30938 Burgwedel (DE)
(74) Vertreter: Leine, Sigurd, Dipl.-Ing.

(57) **Zusammenfassung**

Achsmeßhalter zur Befestigung eines Meßkopfes an einem Fahrzeugrad (2), mit einem Grundkörper (3), in dem sich wenigstens zwei Gruppen von achsparallelen Bohrungen auf verschiedenen Kreisen unterschiedlichen Durchmessers und/oder in unterschiedlicher Zahl und in dem gleichen Umfangsabstand befinden. In die Bohrungen sind jeweils eine Gruppe von Anlagestiften gleicher Länge einsteckbar. Auf diese Weise können die durch die Enden der Anlagestifte gebildeten Anlagepunkte bestimmten Anlagepunkten an der Felge oder Löchern in der Felge oder Zwischenräumen zwischen Speichen der Felge zugeordnet werden, so daß sie durch die Löcher oder Zwischenräume hindurchgreifen und mit ihren Enden an einer hinter der Felge angeordneten Bremsscheibe anliegen können, die eine exakte Bezugsebene darstellt und dazu eine parallele Halterung des Achsmeßhalters sicherstellt.

## Beschreibung

Die Erfindung betrifft einen Achsmeßhalter der im Oberbegriff des Anspruchs 1 genannten Art zur Befestigung eines Meßkopfes an einem Fahrzeugrad.

Durch die Firmendruckschrift "PROVAC", Edition 1996, der Firma Siège Social et Agence France Sud, 16 Première rue, Zl-BP 127 - 13744 Vitrolles cedex ist ein Achsmeßhalter der betreffenden Art bekannt. Er weist einen Grundkörper auf, der aus zwei parallel verlaufenden Stangen besteht, an deren Enden sich Anlageköpfe zur Anlage an einem äußeren Rand einer Felge eines Fahrzeugrades befinden. An den Stangen befinden sich zwei diametral gegenüberliegend angeordnete Arme, die an ihren radial nach außen weisenden Enden jeweils Haken zum Einhaken in ein Profil des Reifens aufweisen. Die radial nach innen gerichteten Enden der Arme sind jeweils mittels eines Drehlagers an einem von dem Grundkörper im wesentlichen axial weg weisenden Ende eines einarmigen Hebels angelenkt, dessen anderes Ende über ein Gelenk mit einer Halterung verbunden ist, die an den Stangen angeordnet ist. Auf die Arme wirken radial nach innen Federn ein. Mittels Spannmitteln sind die einarmigen Hebel nach innen spannbar. Beim Spannen werden so die einarmigen Hebel nach innen geschwenkt und dabei die angelenkten radial inneren Enden der Arme radial nach innen bewegt. Dadurch werden auch die Haken an den Enden der Arme radial nach innen bewegt, so daß sich die Haken in das Profil eines Reifens einhaken. Da die Drehlager der Arme in einer Ebene liegen, die axial entfernt von der Ebene ist, in der sich die Haken befinden, wird beim Spannen mit den Spannmitteln nicht nur eine radiale, sondern jeweils auch eine axiale Kraft erzeugt, die den Grundkörper gegen die Felge zieht.

Ein Nachteil dieses bekannten Achsmeßhalters besteht darin, daß eine exakte Anlage und Ausrichtung in Bezug zu der Achse des Fahrzeugrades nicht möglich ist, da die Anlage des Achsmeßhalters über die beiden Stangen nur an zwei diametral gegenüberliegenden Orten erfolgt, zumal also an Stellen der Felgen, die häufig einen Schlag aufweisen.

Der Erfindung liegt die Aufgabe zugrunde, einen Achsmeßhalter der im Oberbegriff des Anspruchs 1 genannten Art zu schaffen, der einfach zu handhaben ist und trotzdem eine exakte Anlage in einer Ebene senkrecht zu der Achse eines Fahrzeugrades ermöglicht.

Die der Erfindung zugrundeliegende Aufgabe wird durch die im Kennzeichen des Anspruchs 1 angegebene Lehre gelöst.

Der Grundgedanke dieser Lehre besteht darin, in dem Grundkörper wenigstens zwei Gruppen von achsparallelen Bohrungen auf verschiedenen Kreisen unterschiedlichen Durchmessers und/oder in unterschiedlicher Zahl und im gleichen Umfangsabstand vorzusehen. In die Bohrungen sind jeweils eine Gruppe von Anlagestiften gleicher Länge einsteckbar. Auf diese Weise können die durch die Enden der Anlagestifte gebildeten Anlagepunkte bestimmten Anlagepunkten im zentralen Befestigungsbereich der Felge oder Löchern in der Felge oder Zwischenräumen zwischen Speichen der Felge zugeordnet werden, so daß sie durch die Löcher oder Zwischenräume hindurchgreifen und mit ihren Enden an einer hinter der Felge angeordneten Bremsscheibe anliegen können, die eine exakte Bezugsebene darstellt und dazu eine parallele Halterung des Achsmeßhalters sicherstellt.

Um die zu einer Gruppe gehörenden Bohrungen leicht auffinden zu können, weisen diese gemäß einer Weiterbildung der Erfindung an ihren der Einsteckrichtung der Anlagestifte entgegengesetzten Enden jeweils eine Einsenkung auf, wobei die Einsenkungen einer Gruppe von Zentrierbohrungen untereinander gleiches Aussehen, die Einsenkungen verschiedener Gruppen von Bohrungen jedoch unterschiedliches Aussehen haben. Die Einsenkungen an den Bohrungen können zur Erzeugung eines unterschiedlichen Aussehens verschiedene Form und/oder Tiefe und/oder verschiedenen Durchmesser haben. Sie können auch zweckmäßigerweise eine unterschiedliche Farbe aufweisen. Bezüglich der Form der Einsenkungen ist eine Ausbildung als radialer Streifen vorteilhaft.

Anhand der Zeichnung soll die Erfindung näher erläutert werden.
- Fig. 1: zeigt ein Ausführungsbeispiel der Erfindung in Verbindung mit einem geschnitten dargestellten Fahrzeugrad in Radialansicht,
- Fig. 2: zeigt eine Abwandlung der Ausführungsform gemäß Fig. 1,
- Fig. 3: zeigt einen Schnitt III-III durch Fig. 2 und
- Fig. 4: zeigt einen Teilschnitt einer Einzelheit aus Fig. 2 im Bereich einer Bohrung.

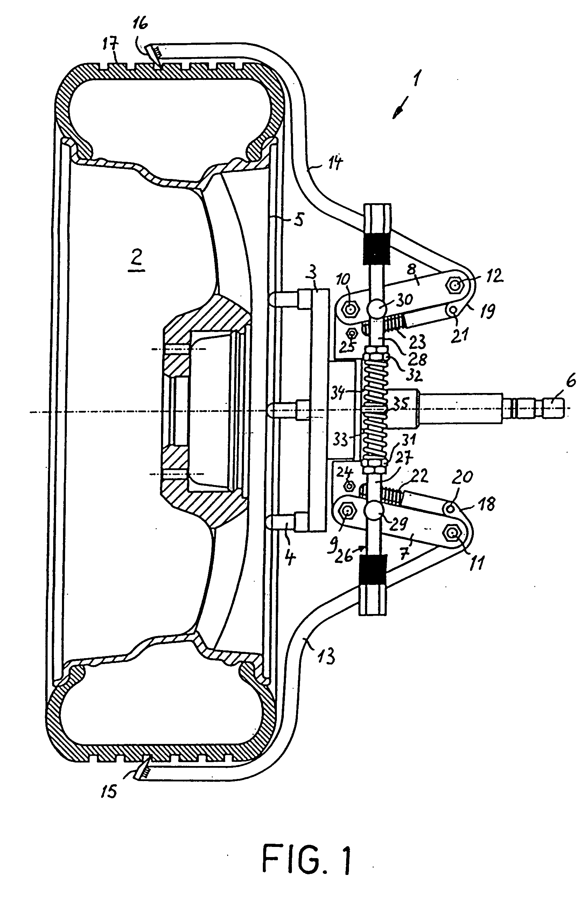

Fig. 1 zeigt einen Achsmeßhalter 1 in einer Lage, in der er an einem Fahrzeugrad 2 befestigt ist. Der Achsmeßhalter 1 weist einen Grundkörper 3 auf, an dem sich Anlagezapfen 4 zur Anlage an einer Felge 5 im zentralen Befestigungsbereich des Fahrzeugrades 2 befinden. Die Anlagezapfen 4 sind in in dieser Zeichnung nicht sichtbare achsparallele Bohrungen auswechselbar eingesteckt.. An dem Grundkörper 3 befindet sich ein Achszapfen 6, an dem ein Meßkopf angebracht werden kann, mit dessen Hilfe die Ausrichtung des Fahrzeugrades 2 bzw. seiner Felge 5 meßbar ist und so in der gewünschten Weise hinsichtlich Sturz und Vorspur eingestellt werden kann.

An dem Grundkörper 3 sind einarmige Hebel 7, 8 mittels Gelenken 9, 10 angelenkt. An den freien Enden der einarmigen Hebel 7, 8 sind mittels Drehlagern 11, 12 Arme 13, 14 angelenkt, die sich diametral gegenüberliegen und an ihren Enden Haken 15, 16 aufweisen, die sich in das Profil eines Reifens 17 des Fahrzeugrades 2 einhaken können.

Die um die Drehlager 11 und 12 schwenkbaren Arme 13 und 14 bilden zusammen mit Armen 18, 19 jeweils einen Winkelhebel. Mit den Enden der Arme 18, 19 sind über Gelenke 20, 21 als Druckfedern ausgebildete Spannfedern 22, 23 verbunden, deren andere Enden über Gelenke 24, 25 mit dem Grundkörper 3 verbunden sind. Die Spannfedern 22, 23 bilden zusammen mit den einarmigen Hebeln 7, 8 Parallelführungen.

Eine Gewindestange 26 weist zwei gegensinnige Gewindeabschnitte 27, 28 auf, die jeweils mit komplementären Innengewinden in Zapfen 29, 30 in Wirkungsverbindung stehen, die drehbar an den einarmigen Hebeln 7 und 8 befestigt sind. Radial innerhalb von den Zapfen 29, 30 befinden sich auf den Gewindeabschnitten 27, 28 verstellbare Muttern 31, 32, die jeweils als Widerlager für Wendelfedern 33, 34 dienen, die auf den Gewindeabschnitten 27 und 28 angeordnet sind und sich jeweils an einem zentralen Widerlager 35 abstützen. An den Enden der Gewindestange 26 befinden sich Handgriffe 36, 37, mit deren Hilfe die Gewindestange 26 drehbar ist. Bei Drehung der Gewindestange 26 bewegen sich die Zapfen 29, 30 gegensinnig radial und damit auch die einarmigen Hebel 7 und 8 und schließlich auch die Arme 13 und 14 mit ihren Haken 15, 16 gegensinnig in radialer Richtung.

Um den Achsmeßhalter 1 an der Felge 5 des Fahrzeugrades 2 zu befestigen, wird zunächst die Gewindestange 26 mittels eines der Handgriffe 36 oder 37 oder mittels beider Handgriffe 36, 37 so gedreht, daß die lichte Weite zwischen den Haken 15, 16 etwas größer ist als der Außendurchmesser des Reifens 17. Danach wird der Grundkörper 3 mit den Anlagezapfen 4 in axialer Richtung zur Anlage an der Felge 5 in ihrem zentralen Befestigungsbereich gebracht und in dieser Lage so lange gehalten, bis durch Drehen der Gewindestange 26 sich die Haken 15 und 16 in das äußere Profil des Reifens 17 einhaken. Wird jetzt die Gewindestange 26 noch weiter gedreht, so werden die Haken 15, 16 mit Kraft gegen den Reifen 17 gezogen, wobei die Reaktionskraft durch die Spannfedern 22, 23 erzeugt wird. Die Anlage der Haken 15, 16 an den Reifen 17 erfolgt daher elastisch. Bei diesem Spannen wird neben der radial von den Haken 15, 16 ausgeübten Kraft auch eine axial wirkende Kraft erzeugt, und zwar dadurch, daß die Drehlager 11, 12 eine Kreisbahn um die Gelenke 9, 10 beschreiben und dadurch sich die Arme 13, 14 nicht nur radial nach innen, sondern auch axial von dem Fahrzeugrad 2 weg bewegen. Im Ergebnis werden also die Haken 15, 16 in elastischer Anlage an dem Profil des Reifens 17 gehalten und gleichzeitig der Grundkörper 3 mit seinen Anlagezapfen 4 elastisch gegen den zentralen Befestigungsbereich der Felge 5 gezogen.

Die Wendelfedern 33, 34 haben gleiche Stärke und Charakteristik, und die Muttern 31, 32 sind so eingestellt, daß die Zapfen 29, 30 gleichen radialen Abstand von dem zentralen Widerlager 35 haben. Aufgrund ihrer gleichen Stärke und Federcharakteristik halten die Wendelfedern 33, 34 dadurch nicht nur die Zapfen 29, 30 in jeder Einstellage der Gewindestange 26 in immer gleichem Abstand zu dem zentralen Widerlager 35, sondern auch damit die einarmigen Hebel 7, 8, die Spannfedern 22, 23 und damit auch die Arme 13, 14 mit ihren Haken 15, 16 immer in symmetrischer Lage zu dem Achszapfen 6 mit der Folge, daß bei der Befestigung des Meßkopfes dieser in axialsymmetrischer Lage gehalten und auch in dieser Lage gegen die Felge 5 des Fahrzeugrades 2 gezogen wird. Dadurch liegen die Anlagezapfen 4 sicher an der Felge 5 in deren zentralen Befestigungsbereich und damit indirekt an einem Befestigungsflansch für das Fahrzeugrad 2 mit hoher Genauigkeit in Bezug zu der Achse eines Fahrzeugrades an.

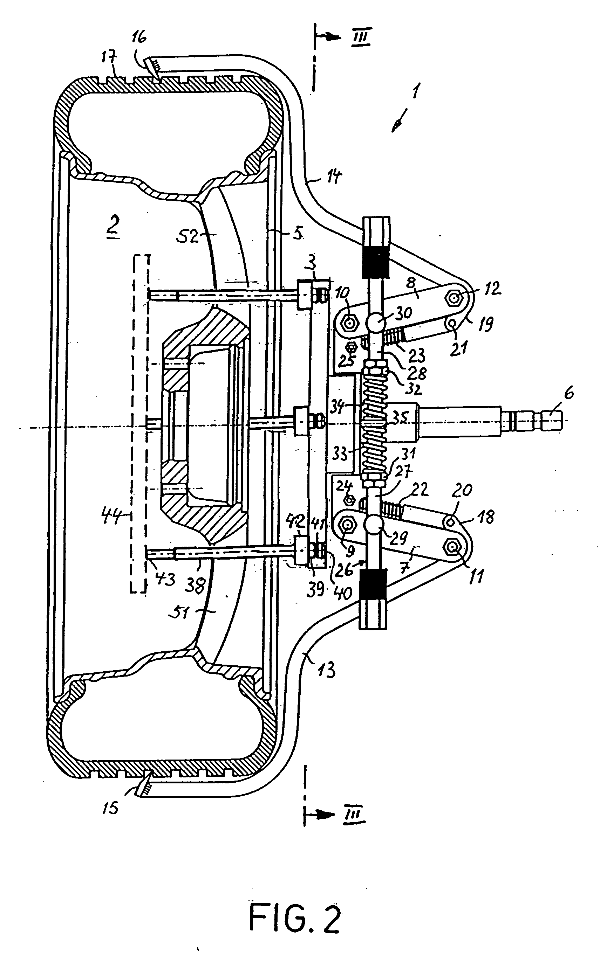

Fig. 2 zeigt eine Abwandlung der Ausführungsform gemäß Fig. 1. Gleiche oder sich entsprechende Teile sind mit gleichen Bezugsziffern versehen. Der Unterschied besteht darin, daß die Anlagezapfen 4 in Fig. 1 durch Anlagestifte 38 ersetzt sind, die Zapfen 39 aufweisen, die in komplementäre Bohrungen 40 in dem Grundkörper 3 eingesteckt sind, wobei ein in eine Nut eingesetzter O-Ring 41 den Zapfen 39 in der Bohrung hält und gleichzeitig ein leichtes Einstecken und Herausziehen ermöglicht. Die Anlagestifte 38 weisen Flansche 42 auf, die nach Einstecken der Zapfen 39 an der dem Fahrzeugrad 2 zugewandten Seite des Grundkörpers 3 anliegen. Alle Anlagestifte 38 haben gleiche Länge, so daß ihre Enden 43 in gleicher Ebene an einer durch gestrichelte Linien dargestellten Bremsscheibe 44 anliegen. Auf diese Weise ist sichergestellt, daß nach Befestigung des Achsmeßhalters der Grundkörper 3 exakt parallel zur Bremsscheibe 44 verläuft.

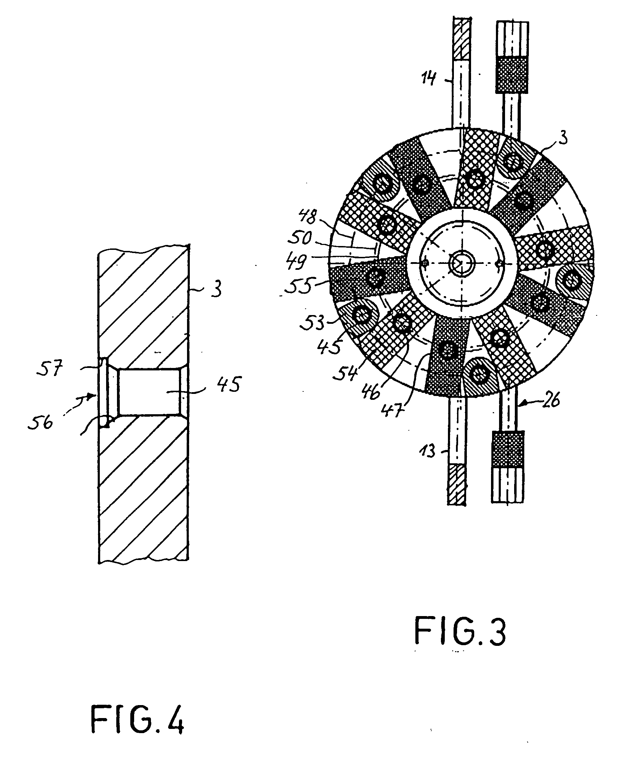

Fig. 3 zeigt einen Schnitt III-III durch Fig. 3. Fig. 3 zeigt also im wesentlichen eine Axialansicht auf den Grundkörper 3 von dem Fahrzeugrad 2 her. Damit ist in Fig. 3 zu erkennen, daß sich in dem Grundkörper 3 drei Gruppen von Bohrungen 45, 46, 47 befinden, die sich jeweils auf Kreisen 48, 49 und 50 befinden und in Umfangsrichtung untereinander jeweils gleichen Abstand haben. Auf diese Weise ist es möglich, durch Einstecken der Anlagestife 38 in unterschiedliche Gruppen von Bohrungen 45, 46 oder 47 die radiale Lage der Anlagestifte 38 jeweils den Felgen 5 eines Fahrzeugrades 2 anzupassen, beispielsweise bei der Ausführungsform gemäß Fig. 2 dergestalt, daß die Anlagestifte 38 durch die Zwischenräume zwischen Speichen 51, 52 der Felge 5 des Fahrzeugrades 2 ragen und in der gewünschten Weise mit ihren Enden 43 an der Bremsscheibe 44 anstoßen können.

Wie aus Fig. 3 ersichtlich, sind die Gruppen von Bohrungen 45, 46 und 47 jeweils mit Markierungen in Form von radialen, streifenförmigen Einsenkungen 53, 54 und 55 versehen, um so beim Einstecken der Anlagestifte 38 jeweils die zu einer Gruppe gehörenden Bohrungen 45, 46 oder 47 auffinden zu können.

Fig. 4 zeigt einen vergrößerten Teilschnitt durch den Grundkörper 3 im Bereich einer Bohrung 45 in Fig. 3. Es ist zu erkennen, daß die Bohrung 45 in durch einen Pfeil 56 angedeuteter Einsteckrichtung für einen Anlagestift 38 eine Einsenkung 57 aufweist, die, was in der Zeichnung nicht erkennbar ist, farbig markiert ist. Durch die Einsenkung 57 kann die Farbschicht kaum beschädigt werden, so daß sie dauerhaft sichtbar ist und so jeweils die zu einer Gruppe gehörenden Bohrungen durch unterschiedliche Farbmarkierungen leicht auffindbar sind.

## Patentansprüche

1. Achsmeßhalter zur Befestigung eines Meßkopfes an einem Fahrzeugrad (2), mit einem Grundkörper (3), mit Mitteln zum axialen Spannen des Grundkörpers (3) gegen das Fahrzeugrad (2) und mit an dem Grundkörper (3) angeordneten Anlagestiften (38), **dadurch gekennzeichnet, daß** in dem Grundkörper (3) wenigstens zwei Gruppen von achsparallelen Bohrungen (45, 46, 47) auf verschiedenen Kreisen unterschiedlichen Durchmessers und/oder in unterschiedlicher Zahl und in gleichem Umfangsabstand angeordnet sind, in die jeweils eine Gruppe von Anlagestiften (38) gleicher Länge einsteckbar sind.

2. Achsmeßhalter nach Anspruch 1, **dadurch gekennzeichnet, daß** die Anlagestifte eine solche Länge haben, daß sie sich bei dem an dem Fahrzeugrad (2) befestigten Achsmeßhalter (1) durch die Felge (5) des Fahrzeugrades (2) hindurcherstrecken und mit ihren Enden gegen eine im Innenbereich der Felge (5) angeordnete Bremsscheibe stoßen.

3. Achsmeßhalter nach Anspruch 1, **dadurch gekennzeichnet, daß** die Bohrungen (45, 46 47) an ihren der Einsteckrichtung der Anlagestifte (38) entgegengesetzten Enden jeweils eine Einsenkung (53, 54, 55) aufweisen, wobei die Einsenkungen (53, 54, 55) einer Gruppe von Bohrungen (45, 46, 47) untereinander gleiches Aussehen, die Einsenkungen (53, 54, 55) verschiedener Gruppen von Bohrungen (45, 46 47) jedoch unterschiedliches Aussehen haben.

4. Achsmeßhalter nach Anspruch 1, **dadurch gekennzeichnet, daß** die Einsenkungen (53, 54, 55) von Bohrungen (45, 46, 47) zur Erzeugung eines unterschiedlichen Aussehens verschiedene Form und/oder Tiefe und/oder verschiedenen Durchmesser haben.

5. Achsmeßhalter nach Anspruch 1, **dadurch gekennzeichnet, daß** die Einsenkungen (53, 54, 55) verschiedener Gruppen von Bohrungen (45, 46, 47) eine unterschiedlich farbige Oberfläche haben.

6. Achsmeßhalter nach Anspruch 1, **dadurch gekennzeichnet, daß** die Einsenkungen (53, 54, 55) die Form radialer Streifen haben.
